# EUROPEAN PATENT SPECIFICATION

(11) **EP 4 074 453 B1**
(45) Date of publication and mention of the grant of the patent: **01.05.2024**
(21) Application number: 20897870.0
(22) Date of filing: 11.12.2020
(51) Int. Cl.: B23K 26/00, B23K 26/042, B23K 26/06, B23K 26/04, B23K 26/70

(54) **LASER DEVICE**
LASERVORRICHTUNG
DISPOSITIF LASER

(30) Priority: 13.12.2019 JP 2019225486; 13.12.2019 JP 2019225487
(43) Date of publication of application: 19.10.2022
(73) Proprietor: Panasonic Intellectual Property Management Co., Ltd., Osaka-shi, Osaka 540-6207 (JP)
(72) Inventor: KATO, Naoya, Osaka-shi, Osaka 540-6207 (JP); ISHIKAWA, Ryo, Osaka-shi, Osaka 540-6207 (JP); IMOTO, Daiki, Osaka-shi, Osaka 540-6207 (JP)
(74) Representative: Vigand, Philippe
(86) International application number: PCT/JP2020/046220
(87) International publication number: WO 2021/117851

(56) References cited:
- EP-A1- 3 549 711
- WO-A1-2019/049914
- JP-A- H09 271 968
- JP-A- H11 342 483
- JP-A- 2010 264 461
- JP-A- 2017 148 839
- KR-A- 20150 014 555
- US-A1- 2019 126 393

## Description

### TECHNICAL FIELD

The technique disclosed herein relates to a laser device.

### BACKGROUND ART

PTL 1 discloses a laser processing device. The laser processing device includes holding means that holds a workpiece, laser light irradiation means that irradiates the workpiece with laser light and performs predetermined processing, mirror means that reflects the laser light and introduces the laser light to the laser light irradiation means, extraction means that branches and extracts a part of the laser light into an optical path of the laser light, light receiving means that receives the laser light extracted by the extraction means, detection means that detects a deviation of an optical axis of the laser light based on a signal from the light receiving means, and control means that controls a reflection direction of the laser light of the mirror means located before the extraction means according to a detection result of the detection means.

### Citation List

### Patent Literature

PTL 1: Unexamined Japanese Patent Publication No. 2010-264461
PTL 2: Korean patent application KR 2015 0014555 A
PTL 3: International patent application WO 2019/049914 A1
PTL 4: Japanese patent application JP 2010 264461 A
PTL 5: European patent application EP 3 549 711 A1
PTL 6: United states patent application US 2019/126393 A1

### SUMMARY OF THE INVENTION

### Technical problem

In the device as described in PTL 1, in order to adjust an inclination angle of a reflecting surface of the mirror means (an inclination angle with respect to an optical path of laser light incident on the reflecting surface) to appropriately control a state of the laser light incident on an object to be irradiated, it is conceivable to prepare correspondence relationship information indicating a correspondence relationship between first information related to a state of the laser light incident on the object to be irradiated and second information related to the inclination angle of the reflecting surface of the mirror means. Note that, since the correspondence relationship between the first information and the second information may change, it is required to appropriately update the correspondence relationship information. However, PTL 1 does not disclose such correspondence relationship information, and does not disclose or suggest any update of the correspondence relationship information.

Therefore, an object of the technique disclosed herein is to provide a laser device capable of appropriately updating the correspondence relationship information.

### Solution to problem

The technique disclosed herein relates to a laser device that irradiates an object to be irradiated with laser light. The laser device includes a laser light source that emits laser light, a reference light source that emits reference light, a folding mirror that includes a first reflecting surface that reflects the laser light emitted from the laser light source in a direction different from a traveling direction to guide the laser light to the object to be irradiated and a second reflecting surface that reflects the reference light emitted from the reference light source in a direction different from a traveling direction, is swingable to change an inclination angle of the first reflecting surface with respect to an optical path of the laser light incident on the first reflecting surface, and changes an inclination angle of the second reflecting surface with respect to an optical path of the reference light incident on the second reflecting surface when the inclination angle of the first reflecting surface with respect to the optical path of the laser light incident on the first reflecting surface changes, a reference light receiver that receives the reference light reflected by the second reflecting surface of the folding mirror, a condensing lens that is disposed in an optical path of the laser light from the first reflecting surface of the folding mirror toward the object to be irradiated and condenses the laser light, and a controller that performs calibration processing. In the calibration processing, the controller makes an observation of a state of the laser light incident on the object to be irradiated and an output of the reference light receiver while sequentially changing the inclination angle of the first reflecting surface of the folding mirror with respect to the optical path of the laser light incident on the first reflecting surface of the folding mirror, and updates correspondence relationship information indicating a correspondence relationship between a target state of the laser light incident on the object to be irradiated and a target output of the reference light receiver based on a result of the observation.

### Advantageous effect of invention

According to the technique disclosed herein, it is possible to appropriately update the correspondence relationship information indicating the correspondence relationship between the target state of the laser light incident on the object to be irradiated and the target output (information related to the inclination angle of first reflecting surface with respect to the optical path of the laser light incident on the first reflecting surface of the folding mirror) of the reference light receiver by performing the calibration processing.

### BRIEF DESCRIPTION OF THE DRAWINGS

Fig. 1 is a schematic diagram illustrating a configuration of a laser processing system according to an exemplary embodiment.
Fig. 2 is a schematic diagram illustrating a configuration of a laser device.
Fig. 3 is a schematic plan view illustrating a configuration of a reference light receiver.
Fig. 4 is a schematic view illustrating a change in an optical path according to a change in a position of a folding mirror.
Fig. 5 is a diagram illustrating a relationship among a light receiving position of reference light, an output of a reference light receiver, and a position of a laser spot.
Fig. 6 is a diagram illustrating correspondence relationship information.
Fig. 7 is a timing chart for explaining basic processing.
Fig. 8 is a flowchart for explaining abnormality detection processing.
Fig. 9 is a diagram for explaining abnormality determination of a laser spot.
Fig. 10 is a flowchart for explaining calibration processing.

### DESCRIPTION OF EMBODIMENT

Hereinafter, an exemplary embodiment will be described in detail with reference to the drawings. Note that the same or equivalent portions in the drawings are denoted by the same reference signs, and descriptions thereof will not be repeated.

### (Laser processing system)

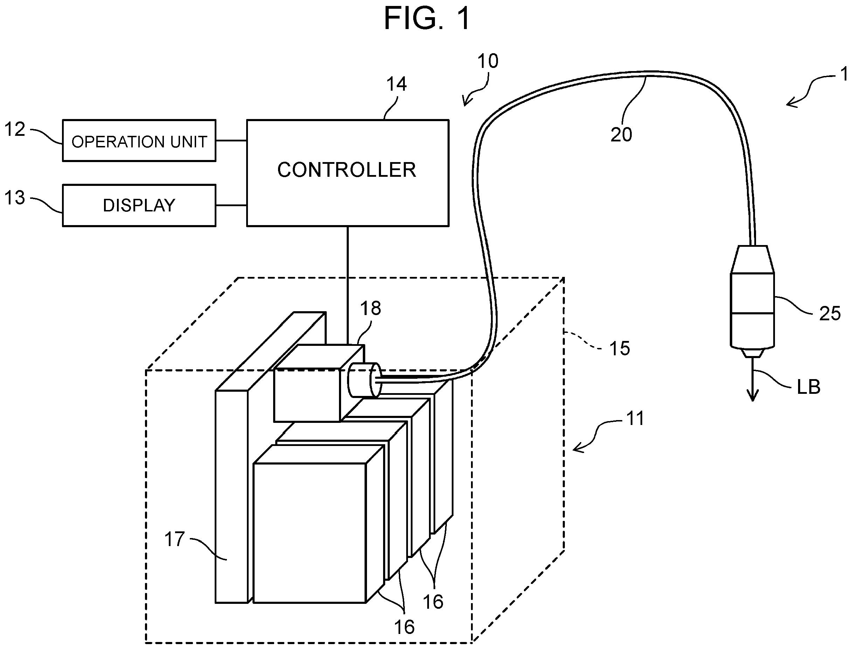

Fig. 1 illustrates a configuration of laser processing system 1 according to an exemplary embodiment. Laser processing system 1 processes a workpiece (not illustrated) using laser light LB. Specifically, laser processing system 1 cuts the workpiece by irradiating the workpiece with laser light LB. In this example, laser processing system 1 includes laser device 10, optical fiber 20, and emission head 25. Laser device 10 irradiates an end portion (end surface) of optical fiber 20 with laser light LB. Note that the end portion of optical fiber 20 is an example of an object to be irradiated.

### [Optical fiber]

One end portion of optical fiber 20 is connected to laser oscillator 11 of laser device 10, and the other end portion of optical fiber 20 is connected to emission head 25. Optical fiber 20 guides laser light LB emitted from laser device 10 to emission head 25.

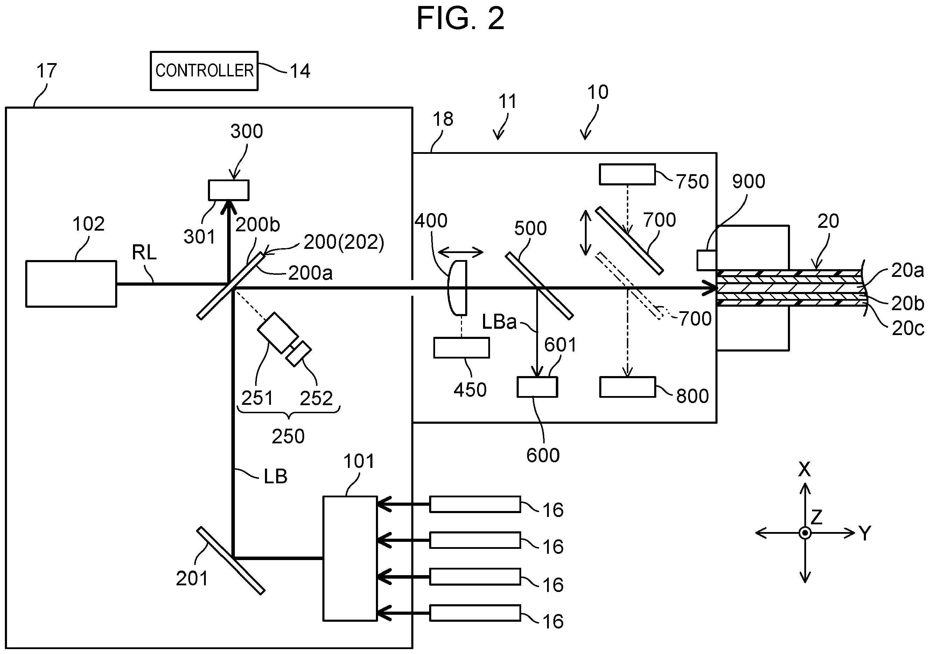

As illustrated in Fig. 2, in this example, optical fiber 20 includes first core 20a, second core 20b surrounding the periphery of first core 20a, and film 20c surrounding the periphery of second core 20b. The cross-sectional shape of first core 20a is a circular shape. The cross-sectional shape of second core 20b is an annular shape. A first cladding (not illustrated) is provided between second core 20b and film 20c, and a second cladding (not illustrated) is provided between first core 20a and second core 20b. Refractive indexes of the first cladding and the second cladding are lower than refractive indexes of first core 20a and second core 20b. The second cladding may be omitted, and the refractive index of first core 20a may be higher than the refractive index of second core 20b.

### [Emission head]

Emission head 25 irradiates a workpiece (not illustrated) with laser light LB guided by optical fiber 20.

### [Laser device]

In this example, laser device 10 includes laser oscillator 11, operation unit 12, display 13, and controller 14.

### [Laser oscillator]

Laser oscillator 11 irradiates the end portion of optical fiber 20 as an object to be irradiated connected to laser oscillator 11 with laser light LB. Laser oscillator 11 includes housing 15, a plurality of laser modules 16, coupling unit 17, and light condensing unit 18. In this example, laser oscillator 11 is a direct diode laser (DDL) oscillator.

Housing 15 houses the plurality of laser modules 16, coupling unit 17, and light condensing unit 18. Each of the plurality of laser modules 16 emits laser light. For example, laser module 16 has a laser array constituted by a plurality of laser diodes (not illustrated) that emit laser beams having different wavelengths. Then, laser module 16 synthesizes wavelengths of the laser beams emitted from the plurality of laser diodes, and emits a wavelength-synthesized laser beam as laser light. Note that an output of laser module 16 may be variable. Output control of laser module 16 may be performed by controller 14.

As illustrated in Fig. 2, coupling unit 17 includes laser light source 101, reference light source 102, first folding mirror 201, second folding mirror 202, and reference light receiver 300, and light condensing unit 18 includes condensing lens 400, partial reflection mirror 500, partial light receiver 600, shutter 700, beam damper 800, and detector 900.

### <Laser light source>

Laser light source 101 emits laser light LB. As a coupler, laser light source 101 couples laser lights emitted from the plurality of laser modules 16, and emits the coupled laser light as laser light LB. For example, laser light source 101 as a coupler includes a plurality of optical components such as a mirror, a lens, and a beam splitter. Note that an output of laser light source 101 may be variable. Output control of laser light source 101 may be performed by controller 14.

Note that, although laser light source 101 is a coupler, it may be configured as an excitation unit including the plurality of laser modules 16. As a result, laser light source 101 as an excitation unit couples laser lights emitted from the plurality of laser modules 16, and emits the coupled laser light as laser light LB.

### <Reference light source>

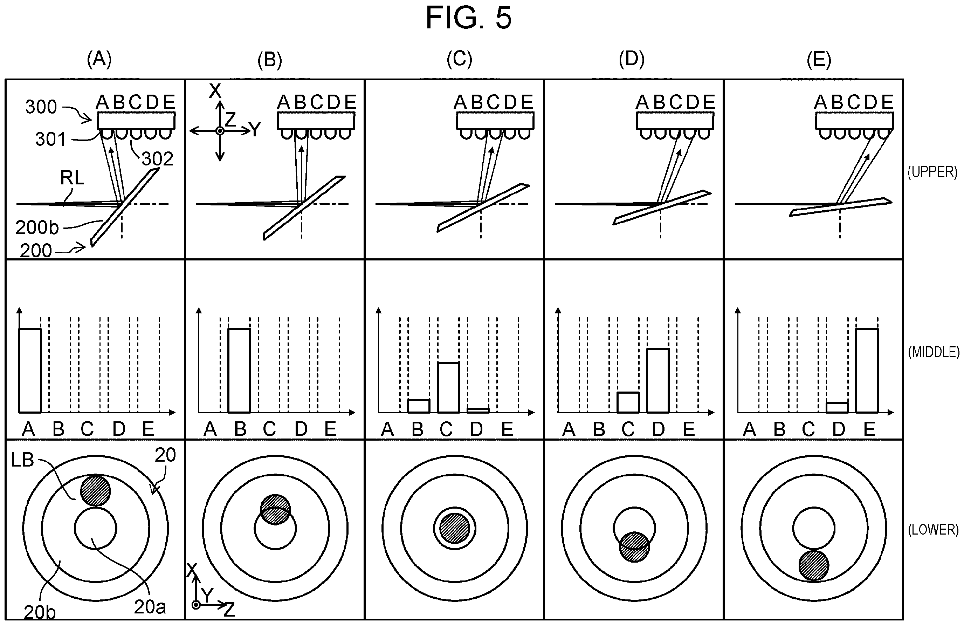

Reference light source 102 emits reference light RL. In this example, as illustrated in Fig. 5, reference light source 102 emits reference light RL such that reference light RL is diffused at a predetermined diffusion angle. In other words, reference light source 102 emits reference light RL such that reference light RL gradually spreads in a traveling direction.

### <Folding mirror>

First folding mirror 201 guides laser light LB to second folding mirror 202 by reflecting laser light LB emitted from laser light source 101 in a direction different from the traveling direction in which laser light LB is emitted. Second folding mirror 202 reflects laser light LB reflected by first folding mirror 201 in a direction different from the traveling direction to guide laser light LB to the end portion of optical fiber 20.

In this example, second folding mirror 202 includes folding mirror 200 having first reflecting surface 200a and second reflecting surface 200b.

First reflecting surface 200a of folding mirror 200 reflects laser light LB emitted from laser light source 101 (in this example, laser light LB reflected by first folding mirror 201) in a direction different from the traveling direction, thereby guiding laser light LB to the end portion of optical fiber 20. Second reflecting surface 200b of folding mirror 200 reflects reference light RL emitted from reference light source 102 in a direction different from the traveling direction.

Furthermore, folding mirror 200 is configured such that when an inclination angle of first reflecting surface 200a with respect to the optical path of laser light LB incident on first reflecting surface 200a changes, an inclination angle of second reflecting surface 200b with respect to the optical path of reference light RL incident on second reflecting surface 200b changes. In this example, folding mirror 200 is formed in a plate shape, one surface of folding mirror 200 serves as first reflecting surface 200a, and the other surface of folding mirror 200 serves as second reflecting surface 200b.

In addition, in this example, folding mirror 200 is swingable such that the inclination angle of first reflecting surface 200a with respect to the optical path of laser light LB incident on first reflecting surface 200a changes. Specifically, coupling unit 17 includes mirror driving mechanism 250 that drives folding mirror 200. Mirror driving mechanism 250 swings folding mirror 200 about a predetermined swing axis such that the inclination angle of the reflecting surface of folding mirror 200 changes. In this example, the swing axis extends in a direction orthogonal to the traveling direction of laser light LB incident on first reflecting surface 200a of folding mirror 200 (a direction orthogonal to the paper surface in the example of Fig. 2). Note that swing control of folding mirror 200 (specifically, control of mirror driving mechanism 250) is performed by controller 14.

In this example, mirror driving mechanism 250 includes swing motor 251 and encoder 252. Folding mirror 200 is fixed to a rotation shaft of swing motor 251. The rotation shaft of swing motor 251 constitutes the swing axis of folding mirror 200. With such a configuration, when swing motor 251 is driven, a swing angle of folding mirror 200 changes according to the change in the rotation angle of swing motor 251, and as a result, the inclination angle of first reflecting surface 200a with respect to the optical path of laser light LB incident on folding mirror 200 changes. Encoder 252 detects a rotation angle of swing motor 251. An output of encoder 252 is transmitted to controller 14.

### <Reference light receiver>

Reference light receiver 300 receives reference light RL reflected by second reflecting surface 200b of folding mirror 200. Then, reference light receiver 300 outputs an electric signal corresponding to a light receiving state (light receiving position and light receiving intensity) of reference light RL. An output of reference light receiver 300 is transmitted to controller 14.

In this example, reference light receiver 300 includes a light receiving surface 301 that receives reference light RL reflected by second reflecting surface 200b of folding mirror 200. Light receiving surface 301 is divided into a plurality of unit regions arranged in a matrix. Then, reference light receiver 300 outputs an electric signal corresponding to a received light intensity of reference light RL for each unit region of light receiving surface 301. In this example, the higher the received light intensity of reference light RL in the unit region of light receiving surface 301, the higher the level of the electric signal corresponding to the unit region.

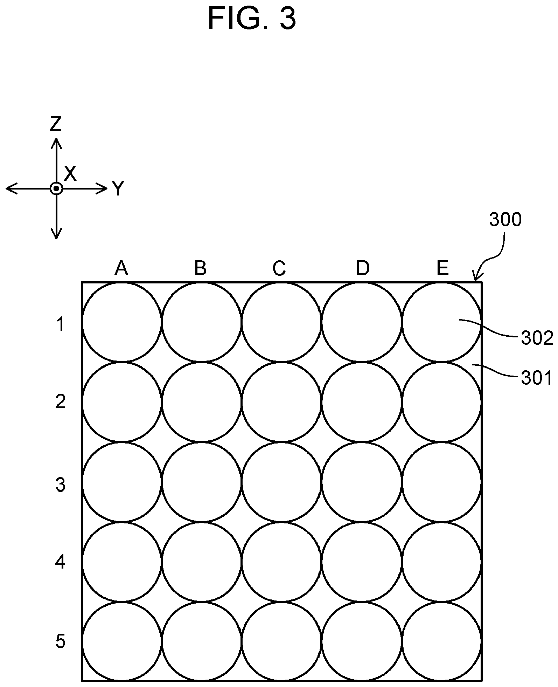

Specifically, as illustrated in Fig. 3, reference light receiver 300 includes light receiving surface 301 and a plurality of light receiving elements 302. The plurality of light receiving elements 302 are arranged in a matrix on light receiving surface 301. In other words, the plurality of light receiving elements 302 are provided in a plurality of unit regions arranged in a matrix on light receiving surface 301. In the example of Fig. 3, 25 light receiving elements 302 arranged in a matrix of five rows and five columns are provided on light receiving surface 301 of reference light receiver 300. Furthermore, light receiving element 302 outputs an electric signal corresponding to the light receiving intensity of reference light RL. In this example, the higher the intensity of reference light RL received by light receiving element 302, the higher the level of the electrical signal output from light receiving element 302. For example, light receiving element 302 may be a charge coupled device (CCD) or a photodiode. Outputs of the plurality of light receiving elements 302 are transmitted to controller 14.

Note that, in this example, one of the row direction and the column direction (specifically, the direction in which alphabets A to E are arranged) of light receiving elements 302 of reference light receiver 300 is a direction along a direction in which a light receiving position of reference light RL in reference light receiver 300 changes according to a change in the swing angle of folding mirror 200.

### <Condensing lens>

Condensing lens 400 is disposed in the optical path of laser light LB from first reflecting surface 200a of folding mirror 200 toward the end portion of optical fiber 20 to condense laser light LB. In this example, condensing lens 400 condenses laser light LB such that a diameter of the spot of laser light LB at the end portion of optical fiber 20 is smaller than a diameter of first core 20a of optical fiber 20.

Furthermore, in this example, condensing lens 400 is movable in a direction from folding mirror 200 toward the end portion of optical fiber 20 (hereinafter referred to as a "first direction"). Specifically, light condensing unit 18 includes lens drive mechanism 450. Lens drive mechanism 450 supports condensing lens 400 and moves condensing lens 400 in the first direction. The size of the spot diameter of laser light LB can be adjusted by adjusting the position of condensing lens 400. For example, lens drive mechanism 450 includes a support base that is slidable in the first direction and supports condensing lens 400, a ball screw that extends in the first direction and is screwed with the support base, and a motor that moves the support base in the first direction by rotating the ball screw. Note that position control of condensing lens 400 (specifically, control of lens drive mechanism 450) is performed by controller 14.

### <Partial reflection mirror>

Partial reflection mirror 500 reflects a part of laser light LB from condensing lens 400 toward the end portion of optical fiber 20. The rest of laser light LB directed from condensing lens 400 to the end portion of optical fiber 20 passes through partial reflection mirror 500. For example, 0.01% of laser light LB traveling from condensing lens 400 toward the end portion of optical fiber 20 is reflected by partial reflection mirror 500, and 99.99% of laser light LB traveling from condensing lens 400 toward the end portion of the optical fiber 20 passes through partial reflection mirror 500.

### <Partial light receiver>

Partial light receiver 600 receives a part of laser light LB reflected by partial reflection mirror 500 (hereinafter referred to as "partial light LBa"). Then, partial light receiver 600 outputs an electric signal corresponding to a light receiving state (light receiving position and light receiving intensity) of partial light LBa. An output of partial light receiver 600 is transmitted to controller 14.

In this example, partial light receiver 600 has light receiving surface 601 that receives partial light LBa. Light receiving surface 601 is divided into a plurality of unit regions arranged in a matrix. Then, partial light receiver 600 outputs an electric signal corresponding to the light receiving intensity of partial light LBa for each unit region of light receiving surface 601.

Specifically, similarly to reference light receiver 300, partial light receiver 600 includes light receiving surface 601 and a plurality of light receiving elements (not illustrated). The plurality of light receiving elements are arranged in a matrix on light receiving surface 601. In other words, the plurality of light receiving elements of partial light receiver 600 are respectively provided in the plurality of unit regions of light receiving surface 601. Outputs of the plurality of light receiving elements of partial light receiver 600 are transmitted to controller 14.

### <Shutter>

Shutter 700 can be switched between an open state and a closed state. In the open state, shutter 700 allows laser light LB (In this example, laser light LB directed from first reflecting surface 200a of folding mirror 200 to the end portion of optical fiber 20 via condensing lens 400 and partial reflection mirror 500.) directed from first reflecting surface 200a of folding mirror 200 to the end portion of optical fiber 20 to enter the end portion of optical fiber 20. In the closed state, shutter 700 prohibits incidence of laser light LB from first reflecting surface 200a of folding mirror 200 toward the end portion of optical fiber 20 on the end portion of optical fiber 20.

In this example, shutter 700 is movable in a direction intersecting with the optical path of laser light LB directed to the end portion of optical fiber 20 (hereinafter referred to as a "second direction"), and can be disposed at an open position (a position indicated by a solid line in Fig. 2) and a closed position (a position indicated by a two-dot chain line in Fig. 2). The open position is a position away from the optical path of laser light LB toward the end portion of optical fiber 20. The closed position is a position existing in the optical path of laser light LB toward the end portion of optical fiber 20. When shutter 700 is disposed at the open position, laser light LB directed to the end portion of optical fiber 20 enters the end portion of optical fiber 20. When shutter 700 is disposed at the closed position, shutter 700 reflects laser light LB directed to the end portion of optical fiber 20 toward beam damper 800. Specifically, light condensing unit 18 includes shutter driving mechanism 750. Shutter driving mechanism 750 supports shutter 700 and moves shutter 700 in the second direction. For example, shutter 700 includes a support base that is slidable in the second direction and supports shutter 700, a ball screw that extends in the second direction and is screwed with the support base, and a motor that moves the support base in the second direction by rotating the ball screw. Note that opening and closing control of shutter 700 (specifically, control of shutter drive mechanism 750) is performed by controller 14.

### <Beam damper>

Beam damper 800 receives laser light LB reflected by shutter 700 in the closed state, and converts laser light LB into heat to consume laser light LB.

### <Detector>

Detector 900 detects intensity of laser light LB. In this example, detector 900 is provided in the vicinity of the end portion (incident end) of optical fiber 20, and detects the intensity of laser light LB at the end portion of optical fiber 20. For example, detector 900 may be a power meter. Detector 900 may be provided in emission head 25. An output of detector 900 is transmitted to controller 14.

### <Arrangement of components of laser oscillator>

In this example, when a vertical direction on the paper surface of Fig. 2 is an "X-axis direction", a horizontal direction on the paper surface of Fig. 2 is a "Y-axis direction" orthogonal to the X-axis direction, and a direction orthogonal to the paper surface of Fig. 2 is a "Z-axis direction" orthogonal to both the X-axis direction and the Y-axis direction, a traveling direction of laser light LB incident on first reflecting surface 200a of folding mirror 200 is the X-axis direction. A direction from folding mirror 200 toward the end portion of optical fiber 20 is the Y-axis direction. Condensing lens 400, partial reflection mirror 500, and shutter 700 in the closed state are arranged in a straight line in the Y-axis direction between folding mirror 200 and the end portion of optical fiber 20. The traveling direction of reference light RL incident on second reflecting surface 200b of folding mirror 200 is the Y-axis direction. A direction from folding mirror 200 toward reference light receiver 300 is the X-axis direction. A direction of the swing axis of folding mirror 200 is the Z-axis direction.

### [Operation unit and display]

Operation unit 12 is given an operation by an operator and outputs a signal corresponding to the operation given by the operator. With such a configuration, the operator can input information by operating operation unit 12. An output of operation unit 12 is transmitted to controller 14. For example, operation unit 12 may be an operation button pressed by the operator or an operation unit of a touch panel. Display 13 displays information. For example, display 13 may be a display of a touch panel.

### [Controller]

Controller 14 is electrically connected to each unit of laser device 10, and can transmit a signal to and from each unit of laser device 10. In this example, controller 14 is electrically connected to each unit (for example, laser light source 101) of laser oscillator 11, operation unit 12, and display 13. Then, controller 14 controls each unit of laser device 10. For example, controller 14 performs swing control of folding mirror 200, position control of condensing lens 400, opening and closing control of shutter 700, and the like. Note that, in this example, controller 14 is electrically connected to each unit (for example, emission head 25 or the like) of laser processing system 1, and controls each unit of laser processing system 1. For example, controller 14 includes a processor and a memory that stores programs and information for operating the processor. An operation of controller 14 will be described later in detail.

### [Change in optical path with change in position of folding mirror]

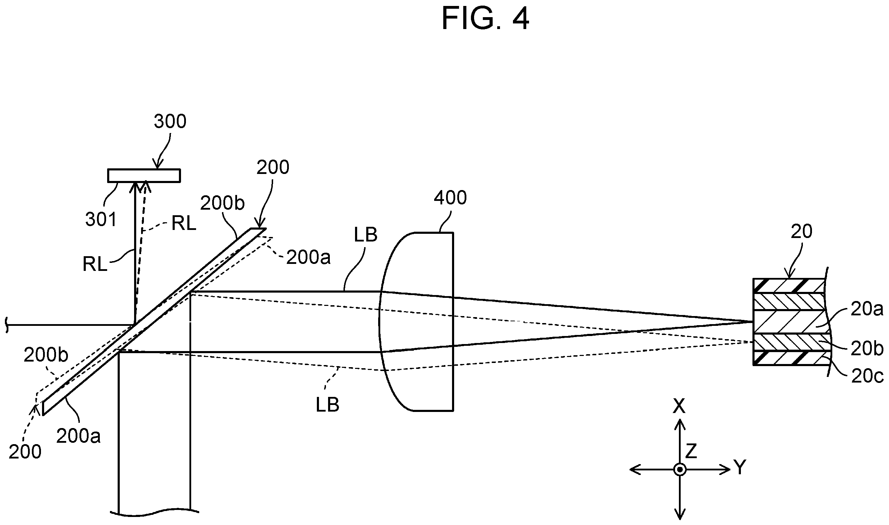

Next, a change in the optical path accompanying a change in the position (specifically, swing angle) of folding mirror 200 will be described with reference to Fig. 4. Hereinafter, an inclination angle of first reflecting surface 200a of folding mirror 200 with respect to the optical path of laser light LB incident on first reflecting surface 200a of folding mirror 200 will be referred to as a "main inclination angle of first reflecting surface 200a of folding mirror 200", an inclination angle of second reflecting surface 200b of folding mirror 200 with respect to the optical path of reference light RL incident on second reflecting surface 200b of folding mirror 200 will be referred to as a "main inclination angle of second reflecting surface 200b of folding mirror 200", and a spot of laser light LB at the end portion of optical fiber 20 will be referred to as a "laser spot".

As illustrated in Fig. 4, when the position of folding mirror 200 changes from the first position (the position indicated by the solid line in Fig. 4) to the second position (the position indicated by the broken line in Fig. 4), the main inclination angle of first reflecting surface 200a of folding mirror 200 changes, and a reflection direction of laser light LB on first reflecting surface 200a of folding mirror 200 changes. As a result, the traveling direction of laser light LB traveling from first reflecting surface 200a of folding mirror 200 toward the end portion of optical fiber 20 via condensing lens 400 and partial reflection mirror 500 (not illustrated in Fig. 4) in order changes, and the position (incident position) of the laser spot changes.

As described above, by changing the position of the laser spot, the profile of laser light LB guided to emission head 25 via optical fiber 20 and emitted from emission head 25 can be changed. Specifically, by setting the position of the laser spot to the position of first core 20a, the profile of laser light LB can be set to a profile suitable for cutting a thin plate (for example, a plate having a thickness of 1 mm to 3 mm). Further, by setting the position of the laser spot to a position straddling both the end surface of first core 20a and the end surface of second core 20b, the profile of laser light LB can be set to a profile suitable for cutting a medium-thickness plate (for example, a plate having a thickness of 4 mm to 16 mm). Further, by setting the position of the laser spot to the position of second core 20b, the profile of laser light LB can be set to a profile suitable for cutting a thick plate (for example, a plate having a thickness of 18 mm to 25 mm).

As illustrated in Fig. 4, when the position of folding mirror 200 changes from the first position to the second position, the main inclination angle of second reflecting surface 200b of folding mirror 200 changes, and the reflection direction of reference light RL on second reflecting surface 200b of folding mirror 200 changes. As a result, the traveling direction of reference light RL from second reflecting surface 200b of folding mirror 200 toward light receiving surface 601 of reference light receiver 300 changes, and the light receiving position of reference light RL on light receiving surface 301 of reference light receiver 300 changes.

### [Relationship among light receiving position of reference light, output of reference light receiver, and position of laser spot]

Next, a relationship among the light receiving position of reference light RL on light receiving surface 301 of reference light receiver 300, the output of reference light receiver 300, and the position of the laser spot (spot of laser light LB at the end portion of optical fiber 20) will be described with reference to Fig. 5. Note that, in this example, one of the row direction and the column direction (specifically, the direction in which alphabets A to E are arranged) of light receiving elements 302 of reference light receiver 300 is a direction along a direction in which a light receiving position of reference light RL in reference light receiver 300 changes according to a change in the swing angle of folding mirror 200.

The upper column (top) of Fig. 5 illustrates the light receiving position of reference light RL on light receiving surface 301 of reference light receiver 300. The middle column (middle) in Fig. 5 illustrates the output of reference light receiver 300. For example, the rectangle "A" in the middle column (middle) of Fig. 5 indicates the output of light receiving element 302 (For example, light receiving element 302 in the third row located at the center among five light receiving elements 302 belonging to the column of "A".) belonging to the column "A" among the plurality of light receiving elements 302 of reference light receiver 300. In other words, the rectangle "A" in the middle column (middle) of Fig. 5 indicates the received light intensity of reference light RL in the unit region in which light receiving elements 302 belonging to the column "A" are arranged. The lower column (bottom) of Fig. 5 illustrates the laser spot position.

As illustrated in Fig. 5, when folding mirror 200 swings in the forward rotation direction (clockwise direction in the upper column of Fig. 5), the position of the laser spot moves from one end side to the other end side in the X-axis direction (from the upper side to the lower side in the lower column (bottom) of Fig. 5), while the light receiving position of reference light RL on light receiving surface 301 of reference light receiver 300 moves from one end side to the other end side in the Y-axis direction (from the left side to the right side in the upper column (top) of Fig. 5). The output of reference light receiver 300 changes in the order of a first state in which the output of light receiving element 302 of "A" is maximized as illustrated in part (A) of Fig. 5, a second state in which the output of light receiving element 302 of "B" is maximized as illustrated in part (B) of Fig. 5, a third state in which the output of light receiving element 302 of "C" is maximized as illustrated in part (C) of Fig. 5, a fourth state in which the output of light receiving element 302 of "D" is maximized as illustrated in part (D) of Fig. 5, and a fifth state in which the output of light receiving element 302 of "E" is maximized as illustrated in part (E) of Fig. 5.

### [Relationship between state of spot of laser light and output of partial light receiver]

Next, a relationship between the state (position and shape) of the spot of laser light LB at the end portion of optical fiber 20 and the output of the partial light receiver will be described.

As described above, when the main inclination angle of first reflecting surface 200a of folding mirror 200 changes, the traveling direction of laser light LB from first reflecting surface 200a of folding mirror 200 toward the end portion of optical fiber 20 via condensing lens 400 and partial reflection mirror 500 in order changes, and the position of the laser spot changes. At this time, the reflection direction of partial light LBa (a part of laser light LB) in partial reflection mirror 500 changes due to a change in the traveling direction of laser light LB incident on partial reflection mirror 500. As a result, the traveling direction of partial light LBa from partial reflection mirror 500 toward light receiving surface 601 of partial light receiver 600 changes, and the light receiving position of partial light LBa on light receiving surface 601 of partial light receiver 600 changes.

Furthermore, when the position of condensing lens 400 changes, the focal distance of laser light LB from condensing lens 400 toward the end portion of optical fiber 20 via partial reflection mirror 500 changes, and the shape of the laser spot changes. At this time, due to a change in the focal distance of laser light LB incident on partial reflection mirror 500, the focal distance of partial light LBa directed from partial reflection mirror 500 to partial light receiver 600 changes. As a result, the shape of the spot of partial light LBa on light receiving surface 601 of partial light receiver 600 changes.

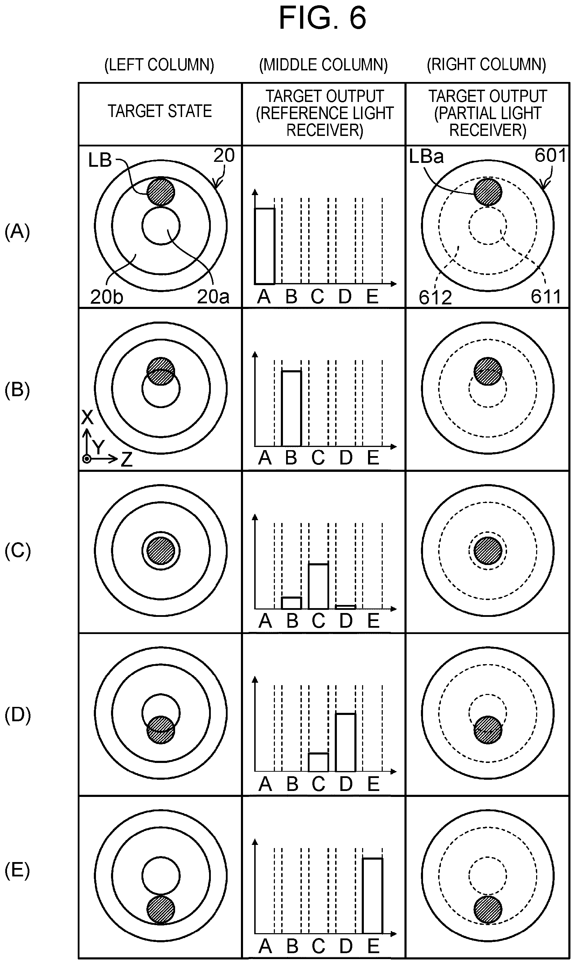

In this example, controller 14 generates a spot image (image data) indicating a spot of partial light LBa on light receiving surface 601 of partial light receiver 600 on the basis of the output of partial light receiver 600. As illustrated in Fig. 6, the spot image includes a spot of partial light LBa formed on light receiving surface 601 of partial light receiver 600. First region 611 of light receiving surface 601 in the spot image corresponds to first core 20a of optical fiber 20, and second region 612 of light receiving surface 601 in the spot image corresponds to second core 20b of optical fiber 20. The state (position and shape) of the spot of partial light LBa in the spot image corresponds to the state of the laser spot. For example, when the spot of partial light LBa is located in first region 611 in the spot image, the laser spot is located in first core 20a.

### [Correspondence relationship information]

Next, the correspondence relationship information will be described with reference to Fig. 6. Controller 14 stores the correspondence relationship information. In this example, the correspondence relationship information indicates a correspondence relationship among the target state of laser light LB incident on the end portion of optical fiber 20, the target output of reference light receiver 300, and the target output of partial light receiver 600.

Hereinafter, the target state of laser light LB incident on the end portion of optical fiber 20 will be simply referred to as a "target state", the target output of reference light receiver 300 will be referred to as a "target reference output", and the target output of partial light receiver 600 will be referred to as a "target partial output".

As illustrated in the left column of Fig. 6, five target states ((A) to (E)) are registered in the correspondence relationship information. The first (Fig. 6(A)) target state corresponds to a state in which the laser spot is located in the first region of second core 20b. The first region of second core 20b is a region of second core 20b located on one end side (upper side in the example of Fig. 6) of first core 20a in the X-axis direction. The second (Fig. 6(B)) target state corresponds to a state in which the laser spot straddles first core 20a and the first region of second core 20b. The third (Fig. 6(C)) target state corresponds to a state in which the laser spot is located at first core 20a. The fourth (Fig. 6(D)) target state corresponds to a state in which the laser spot straddles first core 20a and the second region of second core 20b. The second region of second core 20b is a region of second core 20b located on the other end side (lower side in the example of Fig. 6) of first core 20a in the X-axis direction. The fifth target state (Fig. 6(E)) corresponds to a state in which the laser spot is located in the second region of second core 20b.

As illustrated in the middle column of Fig. 6, five target reference outputs respectively corresponding to the five target states are registered in the correspondence relationship information. The first (Fig. 6(A)) target reference output corresponding to the first (Fig. 6(A)) target state is set to the output of reference light receiver 300 when laser light LB incident on the end portion of optical fiber 20 is in the first target state. Similarly, the second (Fig. 6(B)) to fifth (Fig. 6(E)) target reference outputs corresponding to the second (Fig. 6(B)) to fifth (Fig. 6(E)) target states are set to outputs of reference light receiver 300 when laser light LB incident on the end portion of optical fiber 20 is in the second (Fig.6 (B)) to fifth (Fig. 6(E)) target states, respectively. Note that the setting of the target reference output may be performed on the basis of an experiment or a simulation, or may be performed by processing similar to calibration processing to be described later.

As illustrated in the right column of Fig. 6, five target reference outputs respectively corresponding to the five target states ((A) to (E)) are registered in the correspondence relationship information. The first (Fig. 6(A)) target partial output corresponding to the first (Fig. 6(A)) target state is set to an output of partial light receiver 600 (in this example, a spot image generated based on an output of partial light receiver 600) when laser light LB incident on the end portion of optical fiber 20 is in the first (Fig. 6(A)) target state. Similarly, the second (Fig. 6(B)) to fifth (Fig. 6(E)) target partial outputs corresponding to the second (Fig. 6(B)) to fifth (Fig. 6(E)) target states are set to outputs of partial light receivers 600 when laser light LB incident on the end portion of optical fiber 20 is in the second (Fig. 6(B)) to fifth (Fig. 6(E)) target states, respectively. Note that the setting of the target partial output may be performed on the basis of an experiment or a simulation.

### [Basic processing]

Next, an operation of controller 14 will be described. Controller 14 performs basic processing. The basic processing is processing performed to irradiate the end portion of optical fiber 20 with laser light LB. Note that the basic processing is an example of a case where the state of laser light LB incident on the end portion of optical fiber 20 is set to the target state indicated in the correspondence relationship information. For example, controller 14 performs basic processing before the operation of laser device 10 is started.

In the basic processing, controller 14 performs a target setting operation, an adjustment operation, and a shutter control operation.

### <Target setting operation>

In the target setting operation, controller 14 selects one target state from the correspondence relationship information. For example, when a target designation operation for designating a target state of laser light LB incident on the end portion of optical fiber 20 is given to operation unit 12, controller 14 performs a target setting operation in response to the target designation operation. As a result, the target state designated by the operator is selected from the correspondence relationship information. Note that controller 14 may be configured to automatically perform the target setting operation on the basis of other information such as information regarding processing conditions in laser processing system 1 (for example, information indicating the thickness of the workpiece).

### <Adjustment operation>

In the adjustment operation, controller 14 activates laser light source 101 and reference light source 102. In the adjustment operation, shutter 700 is maintained in the closed state. Then, in the adjustment operation, controller 14 adjusts the main inclination angle of first reflecting surface 200a of folding mirror 200 (inclination angle with respect to the optical path of laser light LB incident on first reflecting surface 200a) such that the output of reference light receiver 300 approaches a predetermined target reference output (target output of reference light receiver 300). In this example, in the adjustment operation, controller 14 adjusts the main inclination angle of first reflecting surface 200a of folding mirror 200, and adjusts the position of the condensing lens so that the output of reference light receiver 300 approaches a predetermined target reference output and the output of partial light receiver 600 approaches a predetermined target partial output (target output of partial light receiver 600).

Note that, in this example, the target reference output in the adjustment operation is the target reference output indicated in the correspondence relationship information, and specifically, is the target reference output corresponding to the target state selected in the target setting operation. The target partial output in the adjustment operation is a target partial output indicated in the correspondence relationship information, and specifically, is a target partial output corresponding to the target state selected in the target setting operation.

### <Shutter control operation>

In the shutter control operation, controller 14 changes shutter 700 from the closed state to the open state on the condition that the output of reference light receiver 300 becomes a predetermined target reference output (target output of reference light receiver 300), the output of partial light receiver 600 becomes a predetermined target partial output (target output of partial light receiver 600), and the laser output (that is, the intensity of laser light LB incident on the end portion of optical fiber 20) becomes a predetermined target output.

Note that, in this example, the target reference output in the shutter control operation is a target reference output indicated in the correspondence relationship information, and specifically, is a target reference output corresponding to a target state selected in the target setting operation (the target state of laser light LB incident on the end portion of optical fiber 20). In addition, the target partial output in the shutter control operation is a target partial output indicated in the correspondence relationship information, and specifically, is a target partial output corresponding to the target state selected in the target setting operation.

In addition, the state in which "the output of reference light receiver 300 becomes the target reference output" includes not only a state in which the output of reference light receiver 300 completely coincides with the target reference output, but also a state in which the output of reference light receiver 300 is considered to coincide with the target reference output. In this example, controller 14 considers that the output of reference light receiver 300 has become the target reference output when the duration of the state in which a matching degree between the output of reference light receiver 300 and the target reference output exceeds a predetermined threshold exceeds a predetermined reference time.

The state in which "the output of partial light receiver 600 becomes the target partial output" includes not only a state in which the output of partial light receiver 600 completely coincides with the target partial output, but also a state in which the output of partial light receiver 600 is considered to coincide with the target partial output. In this example, when a matching degree between the output of partial light receiver 600 and the target partial output exceeds a predetermined threshold, controller 14 considers that the output of partial light receiver 600 has become the target partial output. Note that controller 14 may be configured to consider that the output of reference light receiver 300 has become the target reference output when the duration of the state in which the matching degree between the output of partial light receiver 600 and the target partial output exceeds the threshold exceeds a predetermined reference time.

Furthermore, the above-described state that "the laser output becomes the target output" includes not only a state in which the laser output and the target output completely coincide with each other, but also a state in which the laser output and the target output are regarded to coincide with each other. In this example, controller 14 determines that the laser output has reached the target output when the intensity of laser light LB detected by detector 900 falls within a predetermined allowable range. Note that controller 14 may be configured to consider that the laser output becomes the target output when the duration of the state in which the intensity of laser light LB detected by detector 900 falls within the allowable range exceeds a predetermined reference time.

### [Operation in basic processing]

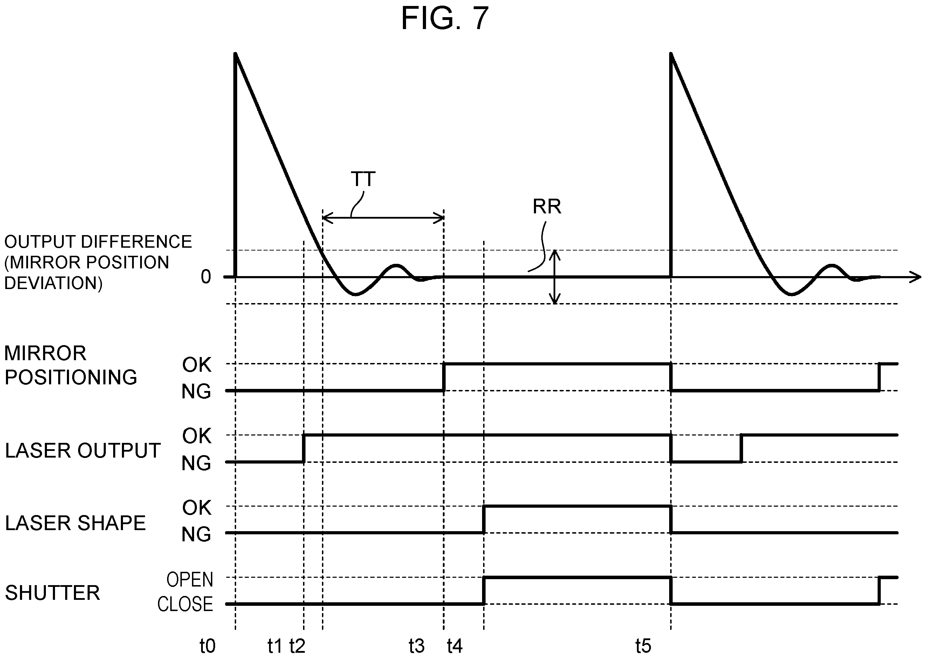

Next, an operation of controller 14 in the basic processing will be described with reference to Fig. 7. Note that, in the following, in order to describe the change in the matching degree between the output of reference light receiver 300 and the target reference output, the change in the positional deviation of folding mirror 200, which is a difference between the position (swing angle) of folding mirror 200 estimated from the output of reference light receiver 300 and the target position (target swing angle) of folding mirror 200 estimated from the target reference output, is taken as an example. As the matching degree between the output of reference light receiver 300 and the target reference output increases, an amount (absolute value) of the positional deviation of folding mirror 200 decreases.

At time t0, the target reference output and the target partial output are set. For example, a target state is selected from the correspondence relationship information. After the time t0, controller 14 adjusts the position (specifically, the swing angle) of folding mirror 200 so that the output of reference light receiver 300 approaches the target reference output. As a result, the amount of positional deviation of folding mirror 200 gradually decreases.

At time t1, it is considered that the laser output has reached the target output. For example, the intensity of laser light LB detected by detector 900 falls within an allowable range.

At time t2, the amount of positional deviation of folding mirror 200 falls within allowable range RR. In other words, the matching degree between the output of reference light receiver 300 and the target reference output exceeds the threshold.

At time t3, the duration of the state in which the amount of positional deviation of folding mirror 200 falls within allowable range RR exceeds reference time TT. In other words, the duration of the state in which the matching degree between the output of reference light receiver 300 and the target reference output exceeds the threshold exceeds the reference time. As a result, the output of reference light receiver 300 is regarded as the target reference output. Then, it is considered that the positioning of the position of folding mirror 200 is completed.

In a period from time t3 to time t4, controller 14 adjusts the position of condensing lens 400 so that the output of partial light receiver 600 approaches the target partial output. As a result, the state (the shape and position of the spot) of laser light LB incident on the end portion of optical fiber 20 gradually approaches the target state. Note that the position control of condensing lens 400 may be performed before the output of reference light receiver 300 is regarded as the target reference output (before the time t3 in the example of Fig. 7).

At time t4, the output of partial light receiver 600 is regarded as the target partial output. For example, the matching degree between the output (specifically, the spot image) of partial light receiver 600 and the target partial output exceeds the threshold. As a result, a condition for bringing shutter 700 from the closed state to the open state is satisfied, and controller 14 brings shutter 700 from the closed state to the open state. As a result, laser light LB traveling toward the end portion of optical fiber 20 enters the end portion of optical fiber 20, is guided to emission head 25 via optical fiber 20, and is emitted from emission head 25 to a workpiece (not illustrated).

After time t5, the same operation as the operation in the period from time t0 to time t5 is performed.

### [Effects of exemplary embodiment]

As described above, in laser device 10 according to the exemplary embodiment, folding mirror 200 having first reflecting surface 200a and second reflecting surface 200b, and reference light receiver 300 that receives reference light RL reflected by second reflecting surface 200b of folding mirror 200 are provided. There is a correlation between the light receiving state (light receiving position and light receiving intensity) of reference light RL in reference light receiver 300 and the main inclination angle (inclination angle with respect to the optical path of laser light LB incident on first reflecting surface 200a) of first reflecting surface 200a of folding mirror 200. Therefore, a change in the main inclination angle of first reflecting surface 200a of folding mirror 200 can be detected based on the light receiving state of reference light RL in reference light receiver 300. This makes it possible to detect an abnormality of the main inclination angle of first reflecting surface 200a of folding mirror 200.

Note that it is conceivable to detect the main inclination angle of first reflecting surface 200a of folding mirror 200 (the inclination angle of laser light LB incident on first reflecting surface 200a with respect to the optical path) based on the output of encoder 252 (that is, the rotation angle of swing motor 251). However, the output of encoder 252 does not reflect the deviation of the reference angle (inclination angle in a reference attitude) of first reflecting surface 200a of folding mirror 200. Therefore, in the detection of the main inclination angle of first reflecting surface 200a based on the output of encoder 252, it is not possible to detect a change in the main inclination angle of first reflecting surface 200a due to the deviation of the reference angle of first reflecting surface 200a of folding mirror 200. The deviation of the reference angle of first reflecting surface 200a of folding mirror 200 occurs due to installation deviation of folding mirror 200, distortion of folding mirror 200, and the like.

On the other hand, in laser device 10 of the exemplary embodiment, the main inclination angle of first reflecting surface 200a of folding mirror 200 (inclination angle with respect to the optical path of laser light LB incident on first reflecting surface 200a) can be detected based on the light receiving state (light receiving position and light receiving intensity) of reference light RL in reference light receiver 300. The deviation of the reference angle of first reflecting surface 200a of folding mirror 200 is reflected in the light receiving state of reference light RL in reference light receiver 300. Therefore, in the detection of the main inclination angle of first reflecting surface 200a based on the light receiving state of reference light RL in reference light receiver 300, a change in the main inclination angle of first reflecting surface 200a due to the deviation of the reference angle of first reflecting surface 200a of folding mirror 200 can be detected. As a result, it is possible to detect the deviation of the reference angle of first reflecting surface 200a of folding mirror 200.

The deviation of the reference angle of first reflecting surface 200a of folding mirror 200 may cause not only a change in the inclination angle of first reflecting surface 200a in a swing direction of folding mirror 200 (that is, a change in the main inclination angle) but also a change in the inclination angle of first reflecting surface 200a in a direction different from the swing direction of folding mirror 200.

In laser device 10 of the exemplary embodiment, the plurality of light receiving elements 302 are arranged in a matrix on light receiving surface 301 of reference light receiver 300. That is, light receiving surface 301 of reference light receiver 300 is divided into a plurality of unit regions arranged in a matrix, and reference light receiver 300 detects the received light intensity of each unit region of light receiving surface 301. With such a configuration, a change in the light receiving state of reference light RL incident on light receiving surface 301 of reference light receiver 300 can be two-dimensionally detected. As a result, the change in the inclination angle of first reflecting surface 200a of folding mirror 200 can be two-dimensionally detected, so that the number of directions of the change in the inclination angle of first reflecting surface 200a that can be detected based on the output of reference light receiver 300 can be increased. For example, not only a change in the inclination angle of first reflecting surface 200a in the swing direction of folding mirror 200 (that is, a change in the main inclination angle) but also a change in the inclination angle of first reflecting surface 200a in a direction different from the swing direction of folding mirror 200 (for example, a change caused by a deviation in the reference angle of first reflecting surface 200a) can be detected. In this manner, since the number of directions of change in the inclination angle of first reflecting surface 200a that can be detected on the basis of the output of reference light receiver 300 can be increased, it is possible to increase the type of abnormality of the inclination angle of first reflecting surface 200a that can be detected on the basis of the output of reference light receiver 300. For example, an abnormality in the inclination angle of first reflecting surface 200a in a direction different from the swing direction of folding mirror 200 (an abnormality caused by a deviation in the reference angle of first reflecting surface 200a) can be detected based on the output of reference light receiver 300.

Furthermore, in laser device 10 of the exemplary embodiment, folding mirror 200 is swingable. By swinging folding mirror 200, the main inclination angle of first reflecting surface 200a of folding mirror 200 (the inclination angle with respect to the optical path of laser light LB incident on first reflecting surface 200a) can be adjusted. In addition, the main inclination angle of first reflecting surface 200a of folding mirror 200 can be appropriately adjusted based on the light receiving state of reference light RL in reference light receiver 300. As a result, the position (incident position) of the spot of laser light LB at the end portion of optical fiber 20 can be appropriately adjusted.

Furthermore, in laser device 10 of the exemplary embodiment, condensing lens 400 and partial reflection mirror 500 are provided, and partial light receiver 600 that receives partial light LBa (a part of laser light LB) reflected by partial reflection mirror 500 is provided. There is a correlation between the light receiving state (light receiving position and light receiving intensity) of partial light LBa in partial light receiver 600 and the state of the spot of laser light LB at the end portion of optical fiber 20. Therefore, the state of the spot of laser light LB at the end portion of optical fiber 20 can be detected based on the light receiving state of partial light LBa in partial light receiver 600.

In addition, in laser device 10 of the exemplary embodiment, it is possible to detect the abnormality of the main inclination angle of first reflecting surface 200a of folding mirror 200 (the inclination angle with respect to the optical path of laser light LB incident on first reflecting surface 200a) on the basis of the light receiving state of reference light RL in reference light receiver 300, and it is possible to detect the abnormality of the spot of laser light LB at the end portion of optical fiber 20 on the basis of the light receiving state of partial light LBa in partial light receiver 600. Then, the cause of the abnormality of laser light LB incident on the end portion of optical fiber 20 can be determined on the basis of the result of the abnormality detection based on the light receiving state of reference light RL in reference light receiver 300 and the result of the abnormality detection based on the light receiving state of partial light LBa in partial light receiver 600. As a result, it is possible to easily specify the portion that causes the abnormality of laser light LB.

In laser device 10 according to the exemplary embodiment, detector 900 that detects the intensity of laser light LB is provided. With such a configuration, the intensity of laser light LB incident on the end portion of optical fiber 20 can be detected based on the output of detector 900. As a result, it is possible to detect an abnormality in the intensity of laser light LB incident on the end portion of optical fiber 20.

Note that, in a case where the position (swing angle) of folding mirror 200 is controlled on the basis of the output of encoder 252 (the rotation angle of swing motor 251) without using the output of reference light receiver 300, when a predetermined standby time elapses from the start of the control of the position of folding mirror 200, it is considered that the positioning of folding mirror 200 is completed. The standby time is set to a time required to reliably set the position of folding mirror 200 to the target position. Therefore, it is difficult to shorten the time (setting time) from the start of the control of the position of folding mirror 200 until the positioning of folding mirror 200 is considered to be completed.

On the other hand, in laser device 10 of the exemplary embodiment, since the position of folding mirror 200 can be confirmed in real time based on the output of reference light receiver 300, the positioning of folding mirror 200 can be quickly completed. Accordingly, the settling time can be shortened.

### [Abnormality detection processing]

Next, another operation of controller 14 will be described. Controller 14 performs abnormality detection processing. The abnormality detection processing is processing performed to detect an abnormality of laser light LB. For example, controller 14 performs abnormality detection processing during operation of laser device 10. Note that controller 14 may be configured to perform the abnormality detection processing in a case where execution of the abnormality detection processing is instructed (for example, in a case where an operation for instructing execution of the abnormality detection processing is given to operation unit 12). Furthermore, the abnormality detection processing may be performed when the cumulative operating time of laser device 10 before shipment from the factory, at the time of installation, at the time of maintenance inspection, or after installation (or after maintenance inspection) reaches a predetermined time (for example, 1000 hours).

Note that, when laser device 10 is not in operation, controller 14 performs the abnormality detection processing after activating laser device 10. At this time, it is preferable to start laser device 10 in a state where shutter 700 is maintained in the closed state. Specifically, controller 14 starts laser light source 101 and reference light source 102, appropriately adjusts the position of folding mirror 200 and the position of condensing lens 400, and then starts the abnormality detection processing. For example, controller 14 may be configured to perform the target setting operation and the adjustment operation of the basic processing before the abnormality detection processing.

In the abnormality detection processing, controller 14 detects an abnormality of a main inclination angle of first reflecting surface 200a of folding mirror 200 (an inclination angle with respect to the optical path of laser light LB incident on first reflecting surface 200a) based on the output of reference light receiver 300. In this example, controller 14 detects the abnormality of the position (specifically, the swing angle) of folding mirror 200 based on the output of reference light receiver 300. Note that the abnormality of the position of folding mirror 200 corresponds to the abnormality of the main inclination angle of first reflecting surface 200a of folding mirror 200. Therefore, the abnormality of the main inclination angle of first reflecting surface 200a of folding mirror 200 can be detected by detecting the abnormality of the position of folding mirror 200.

Furthermore, in the abnormality detection processing, controller 14 detects the abnormality of the laser spot (the spot of laser light LB at the end portion of optical fiber 20) based on the output of partial light receiver 600.

Further, in the abnormality detection processing, controller 14 detects an abnormality in the laser output (the intensity of laser light LB incident on the end portion of optical fiber 20) based on the output of detector 900.

In this example, controller 14 can output the first information, the second information, and the third information in the abnormality detection processing. Then, controller 14 preferentially outputs the second information over the third information, and preferentially outputs the first information over the second information. Note that the first information, the second information, and the third information will be described later in detail.

Furthermore, in the abnormality detection processing performed during the operation of laser device 10, when at least one of an abnormality in the position of folding mirror 200, an abnormality in the laser spot (spot of laser light LB at the end portion of optical fiber 20), and an abnormality in the laser output (intensity of laser light LB incident on the end portion of optical fiber 20) is detected, controller 14 changes shutter 700 from the open state to the closed state. Note that controller 14 may be configured to stop laser device 10 when at least one of an abnormality in the position of folding mirror 200, an abnormality in the laser spot, and an abnormality in the laser output is detected in the abnormality detection processing.

### [Operation in abnormality detection processing]

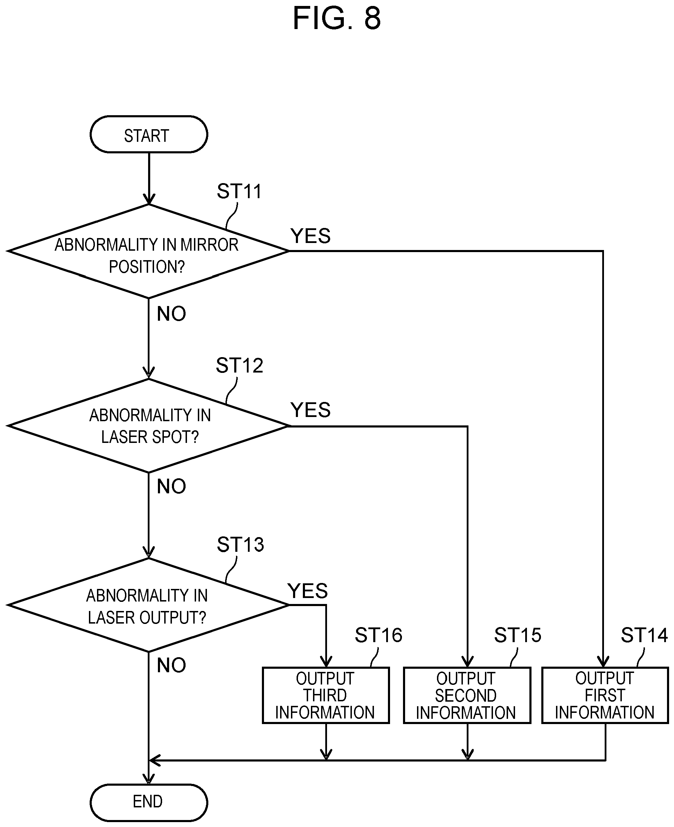

Next, an operation of controller 14 during the abnormality detection processing will be described with reference to Fig. 8.

### <Step ST11>

In step ST11, controller 14 determines whether or not there is an abnormality in the position of folding mirror 200 on the basis of the output of reference light receiver 300. If there is an abnormality in the position of folding mirror 200 (that is, if there is an abnormality in the main inclination angle of first reflecting surface 200a of folding mirror 200), the processing of step ST14 is performed, and if not, the processing of step ST12 is performed.

In this example, controller 14 determines that the position of the folding mirror is normal when the matching degree between the output of reference light receiver 300 and the predetermined target reference output (target output of reference light receiver 300) exceeds a predetermined threshold, and determines that the position of the folding mirror is abnormal when the matching degree between the output of reference light receiver 300 and the target reference output does not exceed the threshold. Note that, in this example, the target reference output is the target reference output indicated in the correspondence relationship information, and specifically, is the target reference output corresponding to the target state selected in the target setting operation.

### <Step ST12>

In step ST12, controller 14 determines whether or not the laser spot (the spot of laser light LB at the end portion of optical fiber 20) is abnormal on the basis of the output of partial light receiver 600. If there is an abnormality in the laser spot, the processing of step ST15 is performed, and if not, the processing of step ST13 is performed.

In this example, controller 14 determines that the laser spot is normal when the matching degree between the output of partial light receiver 600 and the predetermined target partial output (target output of partial light receiver 600) exceeds a predetermined threshold, and determines that the laser spot is abnormal when the matching degree between the output of partial light receiver 600 and the target partial output does not exceed the threshold. Note that, in this example, the above-described target partial output is the target partial output indicated in the correspondence relationship information, and specifically, is the target partial output corresponding to the target state selected in the target setting operation.

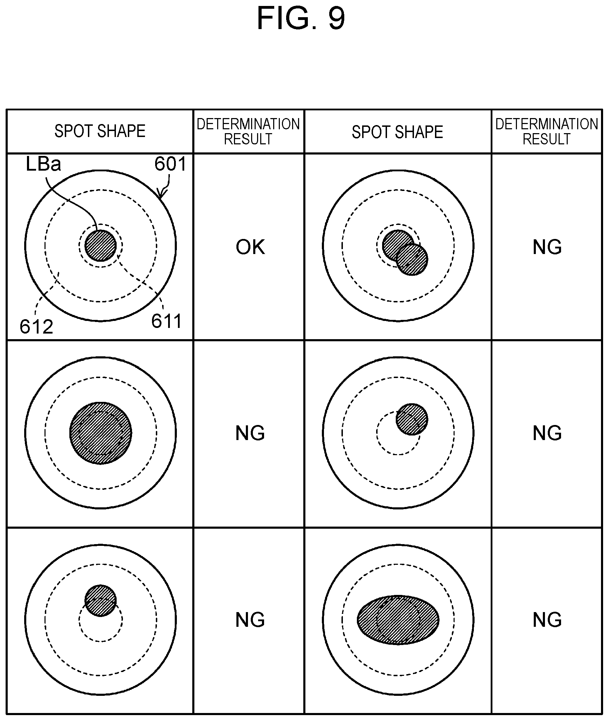

Specifically, controller 14 generates a spot image (an image including a spot of partial light LBa formed on light receiving surface 601 of partial light receiver 600) on the basis of the output of partial light receiver 600. Then, controller 14 determines whether or not the laser spot is abnormal on the basis of the spot image. For example, assuming that the target output of partial light receiver 600 is the target reference output corresponding to the third target state of the correspondence relationship information of Fig. 6 (the output of partial light receiver 600 when the laser spot is located at first core 20a), in a case where the state (position and shape) of the spot of partial light LBa in the spot image is the state illustrated in an upper left field of Fig. 9, controller 14 determines that the laser spot is normal (determination result OK). On the other hand, when the state of the spot of partial light LBa in the spot image is not the state illustrated in the upper left field of Fig. 9, controller 14 determines that the laser spot is abnormal (determination result NG).

### <Step ST13>

In step ST13, controller 14 determines whether or not the laser output (the intensity of laser light LB incident on the end portion of optical fiber 20) is abnormal on the basis of the output of detector 900. If there is an abnormality in the laser output, the processing of step ST16 is performed, and if not, the abnormality detection processing ends.

In this example, controller 14 determines that the laser output is normal when the intensity of laser light LB detected by detector 900 is within a predetermined allowable range, and determines that the laser output is abnormal when the intensity of laser light LB detected by detector 900 is not within the allowable range.

### <Step ST14>

If there is an abnormality in the position of folding mirror 200 in step ST11, controller 14 outputs the first information in step ST14. The first information is information for notifying the abnormality of the position of folding mirror 200. That is, the first information is information for notifying the abnormality of the main inclination angle of first reflecting surface 200a of folding mirror 200 (the inclination angle with respect to the optical path of laser light LB incident on first reflecting surface 200a). For example, the first information may be information for prompting an inspection of folding mirror 200.

In this example, controller 14 outputs the first information to display 13, and display 13 displays the first information. As a result, it is possible to notify the operator of the abnormality of the position of folding mirror 200 (that is, the abnormality of the main inclination angle of first reflecting surface 200a of folding mirror 200).

### <Step ST15>

If there is an abnormality in the laser spot (the spot of laser light LB at the end portion of optical fiber 20) in step ST12, controller 14 outputs the second information in step ST15. The second information is information for notifying the abnormality of the laser spot. For example, the second information may be information for prompting inspection of components (condensing lens 400, partial reflection mirror 500, and the like) that may affect the state (position and shape) of the laser spot.

In this example, controller 14 outputs the second information to display 13, and display 13 displays the second information. As a result, it is possible to notify the operator of the abnormality of the laser spot.

### <Step ST16>

If there is an abnormality in the laser output (the intensity of laser light LB incident on the end portion of optical fiber 20) in step ST13, controller 14 outputs the third information in step ST16. The third information is information for notifying the abnormality of the laser output. For example, the third information may be information for prompting an inspection of a part (such as laser light source 101) that may affect laser output.

In this example, controller 14 outputs the third information to display 13, and display 13 displays the third information. As a result, it is possible to notify the operator of the abnormality of the laser output.

### [Effects of exemplary embodiment]

As described above, in laser device 10 according to the exemplary embodiment, in the abnormality detection processing, the abnormality of the main inclination angle of first reflecting surface 200a of folding mirror 200 (the inclination angle with respect to the optical path of laser light LB incident on first reflecting surface 200a) can be detected based on the output of reference light receiver 300. In addition, it is possible to detect an abnormality of the laser spot (spot of laser light LB at the end portion of optical fiber 20) based on the output of partial light receiver 600. Then, the cause of the abnormality of laser light LB incident on the end portion of optical fiber 20 can be determined based on the result of the abnormality detection based on the output of reference light receiver 300 and the result of the abnormality detection based on the output of partial light receiver 600. As a result, it is possible to easily specify the portion that causes the abnormality of laser light LB.

In the abnormality detection processing, laser device 10 according to the exemplary embodiment can detect the abnormality in the laser output (the intensity of laser light LB incident on the end portion of optical fiber 20) based on the output of detector 900. As a result, it is possible to determine whether or not the cause of the abnormality of laser light LB incident on the end portion of optical fiber 20 is the abnormality of the laser output.

Furthermore, in laser device 10 according to the exemplary embodiment, in the abnormality detection processing, controller 14 preferentially outputs first information for notifying the abnormality of the main inclination angle of first reflecting surface 200a of folding mirror 200 (the inclination angle of laser light LB incident on first reflecting surface 200a with respect to the optical path) rather than second information for notifying the abnormality of the laser spot (the spot of laser light LB at the end portion of optical fiber 20). The swing angle (inclination angle) of folding mirror 200 is adjusted in order to eliminate the abnormality of the main inclination angle of first reflecting surface 200a of folding mirror 200, and the position of condensing lens 400 is adjusted in order to eliminate the abnormality of the laser spot. In addition, by eliminating the abnormality of the main inclination angle of first reflecting surface 200a of folding mirror 200 positioned on an upstream side of condensing lens 400 in the optical path of laser light LB, the traveling direction of laser light LB from first reflecting surface 200a of folding mirror 200 toward condensing lens 400 becomes normal, and as a result, the state of the laser spot can be appropriately controlled by adjusting the position of condensing lens 400. Therefore, by preferentially outputting the first information over the second information, the abnormality of the main inclination angle of first reflecting surface 200a of folding mirror 200 can be preferentially eliminated, so that the abnormality of laser light LB incident on the end portion of optical fiber 20 can be efficiently eliminated.

Furthermore, in laser device 10 of the exemplary embodiment, in the abnormality detection processing, controller 14 preferentially outputs the first information and the second information rather than the third information for notifying the abnormality of the laser output (the intensity of the laser light incident on the end portion of optical fiber 20). With such a configuration, it is possible to preferentially eliminate the abnormality of the main inclination angle of first reflecting surface 200a of folding mirror 200 (the inclination angle of laser light LB incident on first reflecting surface 200a with respect to the optical path) and the abnormality of the laser spot (the spot of laser light LB at the end portion of optical fiber 20), and thus, it is possible to appropriately adjust the laser output in a state where both the main inclination angle of first reflecting surface 200a of folding mirror 200 and the laser spot are not abnormal.

### [First modification of abnormality detection processing]

In the abnormality detection processing, controller 14 may be configured to detect the abnormality of the laser output (the intensity of laser light LB incident on the end portion of optical fiber 20) based on the intensity of the laser light (partial light LBa) received by partial light receiver 600. Specifically, controller 14 may determine that the laser output is normal when the intensity of partial light LBa received by partial light receiver 600 falls within a predetermined allowable range, and may determine that the laser output is abnormal when the intensity of partial light LBa received by partial light receiver 600 does not fall within the allowable range.

With the above configuration, detector 900 can be omitted. In addition, the laser output (the intensity of laser light LB incident on the end portion of optical fiber 20) can be detected based on the intensity of partial light LBa (a part of laser light LB) received by partial light receiver 600. As a result, it is possible to detect abnormality of the laser output, and thus, it is possible to determine whether or not the cause of the abnormality of laser light LB incident on the end portion of optical fiber 20 is the abnormality of the laser output.

### [Second modification of abnormality detection processing]

Furthermore, in the abnormality detection processing, controller 14 may be configured to detect the abnormality of the main inclination angle of first reflecting surface 200a of folding mirror 200 (the inclination angle of laser light LB incident on first reflecting surface 200a with respect to the optical path) based on the output of encoder 252. For example, controller 14 determines that the main inclination angle of first reflecting surface 200a of folding mirror 200 is normal when the matching degree between the output of encoder 252 and the predetermined target output of encoder 252 (the output of encoder 252 corresponding to the target position of folding mirror 200) exceeds a predetermined threshold, and determines that the main inclination angle of first reflecting surface 200a of folding mirror 200 is abnormal when the matching degree between the output of encoder 252 and the target output of encoder 252 does not exceed the threshold.

### [Third modification of abnormality detection processing]

Furthermore, controller 14 may be configured to determine the type of the abnormality of the inclination angle of first reflecting surface 200a of folding mirror 200 on the basis of the result of the abnormality detection based on the output of reference light receiver 300 and the result of the abnormality detection based on the output of encoder 252 in the abnormality detection processing. For example, when an abnormality is detected on the basis of the output of reference light receiver 300 and an abnormality is detected on the basis of the output of encoder 252, controller 14 determines that there is an abnormality in the main inclination angle of first reflecting surface 200a of folding mirror 200 (the inclination angle with respect to the optical path of laser light LB incident on first reflecting surface 200a). Further, when no abnormality is detected on the basis of the output of reference light receiver 300 and an abnormality is detected on the basis of the output of encoder 252, controller 14 determines that there is a deviation in the reference angle of first reflecting surface 200a of folding mirror 200 (for example, distortion of folding mirror 200). In addition, in the abnormality detection processing, controller 14 may be configured to output information for notifying the kind of the abnormality of the inclination angle of first reflecting surface 200a of folding mirror 200.

### [Calibration processing]

Next, another operation of controller 14 will be described. Controller 14 performs calibration processing. The calibration processing is processing performed to update the correspondence relationship information.

In this example, controller 14 performs the calibration processing in a case where the position of the laser spot (the spot of laser light LB at the end portion of optical fiber 20) when the output of reference light receiver 300 becomes the target reference output (the target output of reference light receiver 300) indicated in the correspondence relationship information is abnormal. Specifically, controller 14 performs the calibration processing in a case where a difference between the position (ideal position) of the laser spot observed when the state of laser light LB incident on the end portion of optical fiber 20 is the target state indicated in the correspondence relationship information and the position (actual position) of the laser spot observed when the output of reference light receiver 300 is the target reference output corresponding to the target state in the correspondence relationship information exceeds a predetermined allowable value.

Note that controller 14 may be configured to perform the calibration processing when an abnormality in the position of folding mirror 200 (that is, an abnormality in the main inclination angle of first reflecting surface 200a of folding mirror 200) is detected in the abnormality detection processing. Furthermore, controller 14 may be configured to perform the calibration processing in a case where execution of the calibration processing is instructed (For example, in a case where an operation for instructing execution of the calibration processing is given to operation unit 12.). Further, the calibration processing may be performed before factory shipment, at the time of installation, at the time of maintenance inspection, or when the cumulative operating time of laser device 10 after installation (or after maintenance inspection) reaches a predetermined time (for example, 1000 hours).

In the calibration processing, controller 14 observes the state of laser light LB incident on the end portion of optical fiber 20 and the output of reference light receiver 300 while sequentially changing the main inclination angle of first reflecting surface 200a of folding mirror 200 (the inclination angle of laser light LB incident on first reflecting surface 200a with respect to the optical path), and updates the correspondence relationship information (Information indicating a correspondence relationship between the target state of laser light LB incident on the end portion of optical fiber 20 and the target output of reference light receiver 300) based on the observation result.

In this example, controller 14 observes the state of laser light LB incident on the end portion of optical fiber 20 based on the output of partial light receiver 600. An output of partial light receiver 600 corresponds to the state of laser light LB incident on the end portion of optical fiber 20. Therefore, by observing the output of partial light receiver 600, the state of laser light LB incident on the end portion of optical fiber 20 can be observed. Specifically, controller 14 generates a spot image on the basis of the output of partial light receiver 600, and determines (estimates) the state of laser light LB incident on the end portion of optical fiber 20 on the basis of the state of partial light LBa in the spot image. For example, when the spot of partial light LBa is located in first region 611 in the spot image, controller 14 determines (estimates) that the laser spot (spot of laser light LB at the end portion of optical fiber 20) is located in first core 20a.

Furthermore, in a case where the correspondence relationship information cannot be updated in the calibration processing, controller 14 outputs information for notifying that the correspondence relationship information cannot be updated.

### [Operation in calibration processing]

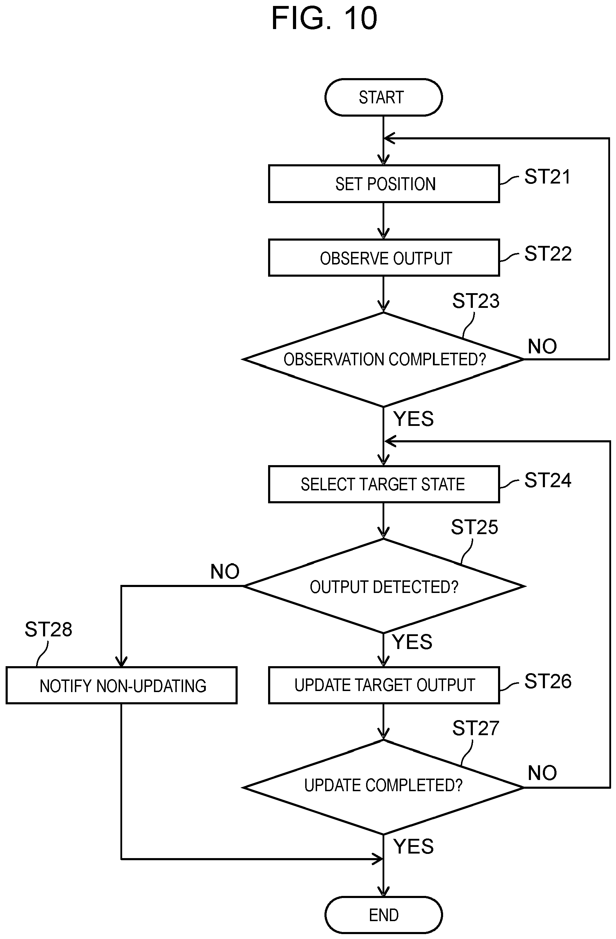

Next, an operation of controller 14 in the calibration processing will be described with reference to Fig. 10.

### <Step ST21>

In step ST21, controller 14 sets the position (specifically, the swing angle) of folding mirror 200 to a predetermined observation position. This observation position is determined such that the position of folding mirror 200 changes stepwise within a movable range of folding mirror 200. For example, the first observation position is set to the swing angle of a lower limit of the movable range of folding mirror 200, the second observation position is set to the swing angle (the swing angle larger by a predetermined unit angle than a lower limit swing angle) that is the second smallest of the swing angles of the lower limit of the movable range of folding mirror 200, and the last observation position is set to the swing angle of an upper limit of the movable range of folding mirror 200.

### <Step ST22>

Next, in step ST22, controller 14 observes the output of reference light receiver 300 and the output of partial light receiver 600 (that is, the state of laser light LB incident on the end portion of optical fiber 20), and stores the output of reference light receiver 300 and the output of partial light receiver 600 in association with each other (see Fig. 6).

### <Step ST23>

Next, in step ST23, controller 14 determines whether or not to complete observation of the output of reference light receiver 300 and the output of partial light receiver 600. When the observation of the output of reference light receiver 300 and the output of partial light receiver 600 is completed (YES in step ST23), the processing of step ST24 is performed. Otherwise (NO in step ST23), the processing in step ST21 is performed, and the position of folding mirror 200 is set to the next observation position.

Regarding YES in step ST23, in this example, in a case where the number of observations of the output of reference light receiver 300 and the output of partial light receiver 600 has reached a predetermined number, controller 14 completes the observation of the output of reference light receiver 300 and the output of partial light receiver 600. For example, when the position of folding mirror 200 is set to the last observation position, controller 14 completes the observation of the output of reference light receiver 300 and the output of partial light receiver 600.

### <Step ST24>

In step ST24, controller 14 selects a target state (target state of laser light LB incident on the end portion of optical fiber 20) from the correspondence relationship information (see Fig. 6). This selection is performed such that the target states indicated in the correspondence relationship information are sequentially selected. For example, in the first selection, the first (Fig. 6(A)) target state is selected from the correspondence relationship information, and in the second selection, the second (Fig. 6(B)) target state is selected from the correspondence relationship information.

### <Step ST25>

Next, controller 14 selects a target partial output (target output of partial light receiver 600) corresponding to the target state selected in step ST24 from the correspondence relationship information. Next, in step ST25, controller 14 detects the output of partial light receiver 600 corresponding to the target partial output (that is, "the state of laser light LB incident on the end portion of optical fiber 20" corresponding to the target state) from among the outputs of partial light receiver 600 observed by the processing in steps ST21 to ST23. Then, in step ST25, controller 14 detects the output of reference light receiver 300 associated with the detected output of partial light receiver 600 from among the outputs of reference light receiver 300 observed by the processing of steps ST21 to ST23. If such an output of reference light receiver 300 is detected (YES in step ST25), the processing of step ST26 is performed, and if not (NO in step ST25), the processing of step ST28 is performed.

### <Step ST26>

In step ST26, controller 14 updates the target output of reference light receiver 300 corresponding to the target state (the target state selected in step ST24) in the correspondence relationship information to the output of reference light receiver 300 detected in step ST25.

### <Step ST27>

Next, in step ST27, controller 14 determines whether or not updating of the correspondence relationship information is completed. When the update of the correspondence relationship information is completed (YES in step ST27), the calibration processing ends. Otherwise (NO in step ST27), the processing in step ST24 is performed, and the next target state is selected from the correspondence relationship information.

In this example, controller 14 completes the update of the correspondence relationship information when the output of reference light receiver 300 is completed for all the target states indicated in the correspondence relationship information (YES in step ST27). For example, in a case where the target state selected from the correspondence relationship information in step ST24 is the last target state (YES in step ST27), controller 14 completes the update of the correspondence relationship information.

### <Step ST28>

In step ST28, controller 14 outputs information (information on a notification of non-updating) for notifying that the correspondence relationship information cannot be updated. Furthermore, controller 14 returns the correspondence relationship information to the original state (the state before the calibration processing is performed).

For example, controller 14 outputs the information on a notification of non-updating to display 13, and display 13 displays the information on a notification of non-updating. As a result, it is possible to notify the operator that the correspondence relationship information cannot be updated.

### [Effects of exemplary embodiment]

As described above, in laser device 10 according to the exemplary embodiment, the correspondence relationship information indicating the correspondence relationship between the target state of laser light LB incident on the end portion of optical fiber 20 and the target output (Information relating to the inclination angle of first reflecting surface 200a with respect to the optical path of laser light LB incident on first reflecting surface 200a of folding mirror 200) of reference light receiver 300 can be appropriately updated by performing the calibration processing.

Furthermore, in laser device 10 according to the exemplary embodiment, in the basic processing (That is, in a case where the state of laser light LB incident on the end portion of optical fiber 20 is set to the target state indicated by the correspondence relationship information), the main inclination angle of first reflecting surface 200a of folding mirror 200 (the inclination angle of laser light LB incident on first reflecting surface 200a with respect to the optical path) is adjusted such that the output of the reference light receiver approaches the target output of reference light receiver 300 corresponding to the target state in the correspondence relationship information. In this control, since the correspondence relationship information appropriately updated by the calibration processing can be used, the main inclination angle of first reflecting surface 200a of folding mirror 200 can be appropriately adjusted.

Furthermore, in laser device 10 of the exemplary embodiment, condensing lens 400 and partial reflection mirror 500 are provided, and partial light receiver 600 that receives partial light LBa (a part of laser light LB) reflected by partial reflection mirror 500 is provided. Then, in the calibration processing, the state of laser light LB incident on the end portion of optical fiber 20 is observed based on the output of partial light receiver 600. With such a configuration, the calibration processing can be appropriately performed based on the output of partial light receiver 600.

Further, in laser device 10 according to the exemplary embodiment, when the correspondence relationship information cannot be updated in the calibration processing, controller 14 outputs information for notifying that the correspondence relationship information cannot be updated. With such a configuration, it is possible to notify that the correspondence relationship information cannot be updated.

Furthermore, in laser device 10 according to the exemplary embodiment, controller 14 performs the calibration processing in a case where the position of the spot of laser light LB at the end portion of optical fiber 20 when the output of reference light receiver 300 is the target output of reference light receiver 300 indicated in the correspondence relationship information is abnormal. With such a configuration, when the correspondence relationship between the target state of laser light LB incident on the end portion of optical fiber 20 and the target output of reference light receiver 300 is not appropriate in the correspondence relationship information, the calibration processing can be performed.

### (Other exemplary embodiments)

In the above description, the spot image has been described as an example of the target output of partial light receiver 600 registered in the correspondence relationship information, but the present invention is not limited thereto. For example, the correspondence relationship information may be a target condition of the spot of partial light LBa in the spot image as the target output of partial light receiver 600. For example, as the target output (see part (C) of Fig. 6) of third partial light receiver 600 illustrated in Fig. 6, a target condition that "the spot of partial light LBa falls within first region 611 " may be registered. In this case, when the target condition is satisfied, the state of the laser spot (the spot of laser light LB at the end portion of optical fiber 20) is regarded as the target state corresponding to the target condition.

In the above description, the case where folding mirror 200 has a plate shape has been taken as an example, but the present invention is not limited thereto. For example, folding mirror 200 may be formed in a polygonal columnar shape extending along the swing axis.

In the above description, the case where condensing lens 400 is movable has been described as an example, but condensing lens 400 may be fixed so as not to be movable. In other words, the position of condensing lens 400 may be variable or fixed.

In the above description, the end portion of optical fiber 20 has been described as an example of the object to be irradiated, but the object to be irradiated is not limited thereto.

The exemplary embodiments described above may be appropriately combined to be practiced. The exemplary embodiments described above are each an intrinsically preferable example, and are not intended to limit the technique disclosed herein, its application, or a range of its use.

### INDUSTRIAL APPLICABILITY

As described above, the technique disclosed herein is useful as a laser device.

### REFERENCE MARKS IN THE DRAWINGS

- 1: laser processing system
- 10: laser device
- 11: laser oscillator
- 12: operation unit
- 13: display
- 14: controller
- 20: optical fiber
- 25: emission head
- 101: laser light source
- 102: reference light source
- 200: folding mirror
- 201: first folding mirror
- 202: second folding mirror
- 300: reference light receiver
- 301: light receiving surface
- 302: light receiving element
- 400: condensing lens
- 500: partial reflection mirror
- 600: partial light receiver
- 601: light receiving surface
- 700: shutter
- 800: beam damper
- 900: detector
- LB: laser light
- RL: reference light

## Claims

1. A laser device (10) configured to irradiate an object to be irradiated with laser light, LB, the laser device (10) comprising:
a laser light source (101) configured to emit laser light, LB;
a reference light source (102) configured to emit reference light, RL;
a swingable mirror (202) that includes a first reflecting surface (200a) configured to reflect the laser light, LB, emitted from the laser light source (101) in a direction different from a traveling direction to guide the laser light, LB, to the object to be irradiated and a second reflecting surface (200b) configured to reflect the reference light, RL, emitted from the reference light source (102) in a direction different from a traveling direction, is configured as swingable to change an inclination angle of the first reflecting surface (200a) with respect to an optical path of the laser light, LB, incident on the first reflecting surface (200a), and to change an inclination angle of the second reflecting surface (200b) with respect to an optical path of the reference light, RL, incident on the second reflecting surface (200b) when the inclination angle of the first reflecting surface (200a) with respect to the optical path of the laser light, LB, incident on the first reflecting surface (200a) changes;
a reference light receiver (300) configured to receive the reference light, RL, reflected by the second reflecting surface (200b) of the swingable mirror (202);
a condensing lens (400) that is disposed in an optical path of the laser light, LB, from the first reflecting surface (200a) of the swingable mirror (202) toward the object to be irradiated and is configured to condense the laser light, LB; and
**characterized in that**, the laser device (10) further comprises:
a controller (14) configured to perform calibration processing,
wherein, in the calibration processing, the controller (14) is configured to make an observation of a state of the laser light, LB, incident on the object to be irradiated and an output of the reference light receiver (300) while sequentially changing the inclination angle of the first reflecting surface (200a) of the swingable mirror (202) with respect to the optical path of the laser light, LB, incident on the first reflecting surface (200a) of the swingable mirror (202), and is configured to update correspondence relationship information indicating a correspondence relationship between a target state of the laser light, LB, incident on the object to be irradiated and a target output of the reference light receiver (300) based on a result of the observation.

2. The laser device (10) according to Claim 1, wherein the controller (14) configured to adjust an inclination angle of the first reflecting surface (200a) of the swingable mirror (202) with respect to the optical path of the laser light, LB, incident on the first reflecting surface (200a) of the swingable mirror (202) such that the output of the reference light receiver (300) approaches the target output of the reference light receiver (300) corresponding to the target state in the correspondence relationship information when the state of the laser light, LB, incident on the object to be irradiated is set to a target state indicated in the correspondence relationship information.

3. The laser device (10) according to Claim 1 or 2, comprising:
a partial reflection mirror (500) configured to reflect a part of the laser light, LB, from the condensing lens (400) toward the object to be irradiated; and
a partial light receiver (600) configured to receive a part of the laser light, LB, reflected by the partial reflection mirror (500),
wherein the controller (14) is configured to observe a state of the laser light, LB, incident on the object to be irradiated based on an output of the partial light receiver (600).

4. The laser device (10) according to any one of Claims 1 to 3, wherein, in the calibration processing, the controller (14) is configured to output information for notifying that the correspondence relationship information cannot be updated when the correspondence relationship information cannot be updated.

5. The laser device (10) according to any one of Claims 1 to 4, wherein the controller (14) is configured to perform the calibration processing in a case where a position of a spot of the laser light, LB, on the irradiated object is abnormal when the output of the reference light receiver (300) is the target output of the reference light receiver (300) indicated in the correspondence relationship information.

## Patentansprüche

1. Laservorrichtung (10), die dafür konfiguriert ist, ein zu bestrahlendes Objekt mit Laserlicht, LB, zu bestrahlen, wobei die Laservorrichtung (10) Folgendes umfasst:
eine Laserlichtquelle (101) die dafür konfiguriert ist, Laserlicht, LB, zu emittieren;
eine Referenzlichtquelle (102), die dafür konfiguriert ist, Referenzlicht, RL, zu emittieren;
einen schwenkbaren Spiegel (202), der eine erste reflektierende Oberfläche (200a) aufweist, die dafür konfiguriert ist, das von der Laserlichtquelle (101) emittierte Laserlicht, LB, in einer von einer Bewegungsrichtung verschiedenen Richtung zu reflektieren, um das Laserlicht, LB, zu dem zu bestrahlenden Objekt zu leiten, und eine zweite reflektierende Oberfläche (200b) aufweist, die dafür konfiguriert ist, das von der Referenzlichtquelle (102) in einer von einer Bewegungsrichtung verschiedenen Richtung emittierte Referenzlicht, RL, zu reflektieren, so konfiguriert ist, dass er schwenkbar ist, um einen Neigungswinkel der ersten reflektierenden Oberfläche (200a) in Bezug auf einen optischen Pfad des auf die erste reflektierende Oberfläche (200a) einfallenden Laserlichts, LB, zu ändern, und um einen Neigungswinkel der zweiten reflektierenden Oberfläche (200b) in Bezug auf einen optischen Pfad des auf die zweite reflektierende Oberfläche (200b) einfallenden Referenzlichts, RL, zu ändern, wenn sich der Neigungswinkel der ersten reflektierenden Oberfläche (200a) in Bezug auf den optischen Pfad des auf die erste reflektierende Oberfläche (200a) einfallenden Laserlichts, LB, ändert;
einen Referenzlichtempfänger (300), der dafür konfiguriert ist, das Referenzlicht, RL, zu empfangen, das von der zweiten reflektierenden Fläche (200b) des schwenkbaren Spiegels (202) reflektiert wird;
eine Sammellinse (400), die in einem optischen Pfad des Laserlichts, LB, von der ersten reflektierenden Fläche (200a) des schwenkbaren Spiegels (202) zu dem zu bestrahlenden Objekt angeordnet ist und dafür konfiguriert ist, das Laserlicht, LB, zu verdichten; und
**dadurch gekennzeichnet, dass** die Laservorrichtung (10) ferner umfasst:
eine Steuereinheit (14), die dafür konfiguriert ist, eine Kalibrierungsverarbeitung durchzuführen,
wobei die Steuereinheit (14) bei der Kalibrierungsverarbeitung dafür konfiguriert ist, eine Beobachtung eines Zustands des auf dem zu bestrahlenden Objekt einfallenden Laserlichts, LB, und eines Ausgangs des Referenzlichtempfängers (300) durchzuführen, während der Neigungswinkel der ersten reflektierenden Fläche (200a) des schwenkbaren Spiegels (202) in Bezug auf den optischen Pfad des Laserlichts, LB, das auf die erste reflektierende Fläche (200a) des schwenkbaren Spiegels (202) einfällt, sequentiell geändert wird, und dafür konfiguriert ist, Korrespondenzbeziehungsinformationen, die eine Korrespondenzbeziehung zwischen einem Zielzustand des Laserlichts, LB, das auf dem zu bestrahlenden Objekt einfällt, und einem Zielausgang des Referenzlichtempfängers (300) angeben, auf der Grundlage eines Ergebnisses der Beobachtung zu aktualisieren.

2. Laservorrichtung (10) nach Anspruch 1, wobei die Steuereinheit (14) dafür konfiguriert ist, einen Neigungswinkel der ersten reflektierenden Oberfläche (200a) des schwenkbaren Spiegels (202) in Bezug auf den optischen Pfad des Laserlichts, LB, das auf die erste reflektierende Oberfläche (200a) des schwenkbaren Spiegels (202) einfällt, so anzupassen, dass sich der Ausgang des Referenzlichtempfängers (300) dem Zielausgang des Referenzlichtempfängers (300) nähert, der dem Zielzustand in den Korrespondenzbeziehungsinformationen entspricht, wenn der Zustand des Laserlichts, LB, das auf das zu bestrahlende Objekt einfällt, auf einen Zielzustand eingestellt ist, der in den Korrespondenzbeziehungsinformationen angegeben ist.

3. Laservorrichtung (10) nach Anspruch 1 oder 2, umfassend:
einen Teilreflexionsspiegel (500), der dafür konfiguriert ist, einen Teil des Laserlichts, LB, von der Sammellinse (400) in Richtung des zu bestrahlenden Objekts zu reflektieren; und
einen Teillichtempfänger (600), der dafür konfiguriert ist, einen Teil des von dem Teilreflexionsspiegel (500) reflektierten Laserlichts, LB, zu empfangen,
wobei die Steuereinheit (14) dafür konfiguriert ist, einen Zustand des Laserlichts, LB, das auf dem zu bestrahlende Objekt einfällt, auf der Grundlage eines Ausgangs des Teillichtempfängers (600) zu beobachten.

4. Laservorrichtung (10) nach einem der Ansprüche 1 bis 3, wobei die Steuereinheit (14) bei der Kalibrierungsverarbeitung dafür konfiguriert ist, Informationen auszugeben, um mitzuteilen, dass die Korrespondenzbeziehungsinformationen nicht aktualisiert werden können, wenn die Korrespondenzbeziehungsinformationen nicht aktualisiert werden können.

5. Laservorrichtung (10) nach einem der Ansprüche 1 bis 4, wobei die Steuereinheit (14) dafür konfiguriert ist, die Kalibrierungsverarbeitung in einem Fall durchzuführen, in dem eine Position eines Flecks des Laserlichts, LB, auf dem bestrahlten Objekt anormal ist, wenn der Ausgang des Referenzlichtempfängers (300) der in den Korrespondenzbeziehungsinformationen angegebene Zielausgang des Referenzlichtempfängers (300) ist.

## Revendications

1. Dispositif laser (10) configuré pour irradier un objet à irradier par une lumière laser, LB, le dispositif laser (10) comprenant :
une source de lumière laser (101) configurée pour émettre une lumière laser, LB ;
une source de lumière de référence (102) configurée pour émettre une lumière de référence, RL ;
un miroir basculant (202) qui comporte une première surface réfléchissante (200a) configurée pour réfléchir la lumière laser, LB, émise par la source de lumière laser (101) dans une direction différente d'une direction de déplacement pour guider la lumière laser, LB, vers l'objet à irradier, et une deuxième surface réfléchissante (200b) configurée pour réfléchir la lumière de référence, RL, émise par la source de lumière de référence (102) dans une direction différente d'une direction de déplacement, qui est configuré de manière à pouvoir basculer pour modifier un angle d'inclinaison de la première surface réfléchissante (200a) par rapport à un chemin optique de la lumière laser, LB, incidente sur la première surface réfléchissante (200a), et pour modifier un angle d'inclinaison de la deuxième surface réfléchissante (200b) par rapport à un chemin optique de la lumière de référence, RL, incidente sur la deuxième surface réfléchissante (200b), lorsque l'angle d'inclinaison de la première surface réfléchissante (200a) par rapport au chemin optique de la lumière laser, LB, incidente sur la première surface réfléchissante (200a) se modifie ;
un récepteur de lumière de référence (300) configuré pour recevoir la lumière de référence, RL, réfléchie par la deuxième surface réfléchissante (200b) du miroir basculant (202) ;
une lentille de condensation (400) qui est disposée dans un chemin optique de la lumière laser, LB, allant de la première surface réfléchissante (200a) du miroir basculant (202) vers l'objet à irradier, et qui est configurée pour condenser la lumière laser, LB ; et
**caractérisé en ce que** le dispositif laser (10) comprend en outre :
un dispositif de commande (14) configuré pour réaliser un traitement d'étalonnage,
dans lequel lors du traitement d'étalonnage, le dispositif de commande (14) est configuré pour faire une observation d'un état de la lumière laser, LB, incidente sur l'objet à irradier et d'une sortie du récepteur de lumière de référence (300) tout en modifiant séquentiellement l'angle d'inclinaison de la première surface réfléchissante (200a) du miroir basculant (202) par rapport au chemin optique de la lumière laser, LB, incidente sur la première surface réfléchissante (200a) du miroir basculant (202), et est configuré pour mettre à jour des informations de relation de correspondance indiquant une relation de correspondance entre un état cible de la lumière laser, LB, incidente sur l'objet à irradier et une sortie cible du récepteur de lumière de référence (300) sur la base d'un résultat de l'observation.

2. Dispositif laser (10) selon la revendication 1, dans lequel le dispositif de commande (14) est configuré pour ajuster un angle d'inclinaison de la première surface réfléchissante (200a) du miroir basculant (202) par rapport au chemin optique de la lumière laser, LB, incidente sur la première surface réfléchissante (200a) du miroir basculant (202), de sorte que la sortie du récepteur de lumière de référence (300) se rapproche de la sortie cible du récepteur de lumière de référence (300) correspondant à l'état cible dans les informations de relation de correspondance, lorsque l'état de la lumière laser, LB, incidente sur l'objet à irradier est réglé à un état cible indiqué dans les informations de relation de correspondance.

3. Dispositif laser (10) selon la revendication 1 ou 2, comprenant :
un miroir à réflexion partielle (500) configuré pour réfléchir une partie de la lumière laser, LB, provenant de la lentille de condensation (400) vers l'objet à irradier ; et
un récepteur de lumière partielle (600) configuré pour recevoir une partie de la lumière laser, LB, réfléchie par le miroir à réflexion partielle (500),
dans lequel le dispositif de commande (14) est configuré pour observer un état de la lumière laser, LB, incidente sur l'objet à irradier sur la base d'une sortie du récepteur de lumière partielle (600).

4. Dispositif laser (10) selon l'une des revendications 1 à 3, dans lequel lors du traitement d'étalonnage, le dispositif de commande (14) est configuré pour délivrer des informations pour notifier que les informations de relation de correspondance ne peuvent pas être mises à jour, lorsque les informations de relation de correspondance ne peuvent pas être mises à jour.

5. Dispositif laser (10) selon l'une des revendications 1 à 4, dans lequel le dispositif de commande (14) est configuré pour réaliser le traitement d'étalonnage dans le cas où une position d'un point de la lumière laser, LB, sur l'objet irradié est anormale, lorsque la sortie du récepteur de lumière de référence (300) est la sortie cible du récepteur de lumière de référence (300) qu'indiquent les informations de relation de correspondance.
